# EUROPEAN PATENT APPLICATION

(11) **EP 4 485 874 A1**
(43) Date of publication of application: **01.01.2025**
(21) Application number: 23762957.1
(22) Date of filing: 02.03.2023
(51) Int. Cl.: H04L 41/0803

(54) **ASSET INFORMATION COLLECTION METHOD, ELECTRONIC DEVICE AND COMPUTER-READABLE STORAGE MEDIUM**

(30) Priority: 02.03.2022 CN 202210206180
(71) Applicant: ZTE Corporation, Shenzhen, Guangdong 518057 (CN)
(72) Inventor: QIU, Ruichan, Shenzhen, Guangdong 518057 (CN); CHENG, Li, Shenzhen, Guangdong 518057 (CN); WANG, Jing, Shenzhen, Guangdong 518057 (CN)
(74) Representative: Canzler & Bergmeier Patentanwälte Partnerschaft mbB
(86) International application number: PCT/CN2023/079291
(87) International publication number: WO 2023/165559

(57) **Abstract**

Provided in the embodiments of the present application are an asset information collection method, an electronic device and a computer-readable storage medium. A telecommunication asset information collection method comprises: configuring collection parameters, wherein the collection parameters comprise a collection time and collection point information; when the collection time is reached, generating a collection task according to the collection point information; according to the collection task, acquiring collection data from a collection point corresponding to the collection point information, wherein the collection data comprises asset information and asset association relationship information; and generating an information processing task; and according to the information processing task and the collection data, constructing an asset association relationship graph, and storing the constructed asset association relationship graph, or according to the information processing task and the collection data, updating a stored asset association relationship graph.

## Description

### CROSS REFERENCE TO RELATED APPLICATIONS

The present disclosure claims the priority to Chinese Patent Application No. CN202210206180.3 entitled "ASSET INFORMATION COLLECTION METHOD, ELECTRONIC DEVICE AND COMPUTER-READABLE STORAGE MEDIUM" and filed on March 2nd, 2022, the contents of which are incorporated herein by reference in their entirety.

### TECHNICAL FIELD

Embodiments of the present disclosure relate to the field of information collection technology, and in particular, to an asset information collection method, an electronic device, and a computer-readable storage medium.

### BACKGROUND

With the development of virtualization technology, the core network architecture is gradually changed from the traditional architecture with integration of software and hardware to a service architecture, and has the capability to construct infrastructure resources, the capability to unify resource management, and the arrangement capability. The service architecture covers a multi-level network including a hardware infrastructure layer, a virtual resource layer, a network function layer, and a network function management layer. The virtual resource layer (e.g., virtual machines and containers) shares hardware infrastructure; the network function layer (e.g., network elements and applications) selects corresponding virtual resources according to deployment forms; and a unified resource management layer (e.g., network administrators) realizes unified arrangement and scheduling of resources.

At present, telecommunication asset collection mainly involves collection of information of traditional networking devices and information of software assets installed on the networking devices, and the networking devices and the software assets installed thereon include specialized devices for telecommunication network, routing and forwarding devices, security devices, and applications, software, and services installed on the devices.

However, traditional collection methods are not applicable to the novel core network, because the novel core network is virtualized and has complicated network functions and numerous components, and there are association relationships between lower-layer infrastructure hardware assets and upper-layer virtual assets.

### SUMMARY

The embodiments of the present disclosure provide an asset information collection method, an electronic device, and a computer-readable storage medium.

An embodiment of the present disclosure provides an asset information collection method, including: configuring collection parameters, wherein the collection parameters include collection time and collection point information; in a case of arrival of the collection time, generating a collection task according to the collection point information; acquiring collected data from a collection point corresponding to the collection point information according to the collection task, wherein the collected data includes: asset information and asset association relationship information; and generating an information processing task; and constructing an asset association relationship map according to the information processing task and the collected data, and storing the constructed asset association relationship map; or updating a stored asset association relationship map according to the information processing task and the collected data.

An embodiment of the present disclosure provides an electronic device, including: at least one processor; and a storage device having stored thereon at least one program which, when executed by the at least one processor, implements the asset information collection method according to the present disclosure.

An embodiment of the present disclosure provides a computer-readable storage medium having stored thereon a computer program which, when executed by a processor, implements the asset information collection method according to the present disclosure.

### BRIEF DESCRIPTION OF DRAWINGS

FIG. 1 is a flowchart illustrating an asset information collection method according to the present disclosure;
FIG. 2 is a schematic diagram of an asset association relationship map according to the present disclosure;
FIG. 3 is a block diagram of an asset information collection device according to the present disclosure;
FIG. 4 is a schematic diagram illustrating interaction in a collection and information processing process of asset information according to the present disclosure;
FIG. 5 is a schematic diagram illustrating interaction in an exception handling process of collection timeout according to the present disclosure;
FIG. 6 is a schematic diagram illustrating interaction in an exception handling process of information processing timeout according to the present disclosure; and
FIG. 7 is a schematic diagram illustrating interaction in a timed cleaning process according to the present disclosure.

### DETAIL DESCRIPTION OF EMBODIMENTS

In order to enable those of ordinary skill in the art to better understand the technical solutions of the present disclosure, a telecommunication asset information collection method, an electronic device, and a computer-readable storage medium provided in the present disclosure are described in detail below with reference to the drawings.

Exemplary embodiments of the present disclosure will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of' used herein indicate(s) the presence of the described features, integers, operations, elements and/or components, but do not exclude the presence or addition of at least one other feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

Although the asset information collection method provided in the embodiments of the present disclosure is proposed based on the novel core network architecture, the asset information collection method provided in the embodiments of the present disclosure is not only applicable to the novel core network, but also applicable to any other network having the network architecture the same as or similar to that of the novel core network.

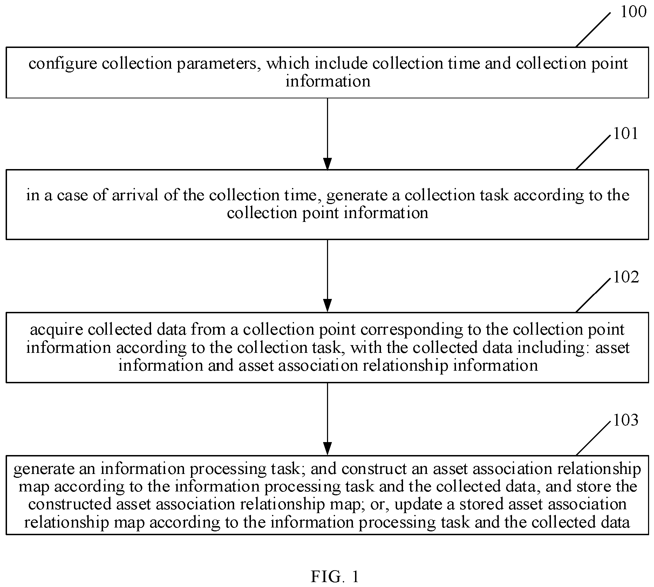

FIG. 1 is a flowchart illustrating an asset information collection method according to the present disclosure.

Referring to FIG. 1, the present disclosure provides an asset information collection method, including operation 100 to operation 103.

At operation 100, collection parameters are configured, and the collection parameters include collection time and collection point information.

In some exemplary embodiments, the collection parameters further include data to be collected.

In some exemplary embodiments, the collection point information may be any identification or name that can distinguish between different collection points.

In some exemplary embodiments, for a newly added collection point, the collection parameters may further include at least one of: an asset type of assets at the collection point, an authentication type, authentication parameters, and a collection mode.

In some example embodiments, different authentication types are corresponding to different authentication parameters. For example, for password authentication, the authentication parameters may be password authentication parameters; for token authentication, the authentication parameters may be token authentication parameters; and for certificate authentication, the authentication parameters may be certificate information.

In some exemplary embodiments, the password authentication parameters include: a user name and a password.

In some exemplary embodiments, the token authentication parameters include: a user name, a password, a Token name, and a Token address.

In some exemplary embodiments, the collection mode may be, for example, collecting a file related to asset information via a rest interface, so as to acquire the corresponding asset information from the file.

In some exemplary embodiments, it may be configured to delete at least one of the configured collection parameters or configured to modify at least one of the configured collection parameters.

At operation 101, in a case of arrival of the collection time, a collection task is generated according to the collection point information.

In some exemplary embodiments, the collection task is configured to instruct acquisition of collected data from a collection point corresponding to the collection point information.

In some exemplary embodiments, generating the collection task according to the collection point information includes: generating the collection task according to the collection point information and the data to be collected.

In some exemplary embodiments, after generating the collection task according to the collection point information, the method further includes: adding the collection task to a task list, wherein each entry of the task list includes: a task identification, a task type, and at least one of task start time, a task execution state, and state description information.

In some exemplary embodiments, the task identification is configured to distinguish between different tasks.

In some exemplary embodiments, the task type is configured to indicate a type of a task, such as the collection task or an information processing task.

In some exemplary embodiments, the task start time refers to the time when execution of a task is started.

In some exemplary embodiments, the task execution state refers to a state of a task during execution of the task, such as collection timeout, collection completion, information processing timeout, information processing completion and so on.

In some exemplary embodiments, the state description information refers to description information of the task execution state.

At operation 102, collected data is acquired from the collection point corresponding to the collection point information according to the collection task, and the collected data includes: asset information and asset association relationship information.

In some exemplary embodiments, the asset information includes at least one of: physical asset information and virtual asset information.

In some example embodiments, the physical asset information is configured to represent information of devices on a hardware infrastructure layer, such as network elements, network administrators, cloud hosts, security devices, network devices and so on.

In some exemplary embodiments, the physical asset information includes: physical asset identifications and attribute information of physical assets.

In some exemplary embodiments, the physical asset identifications are configured to distinguish between different physical assets.

In some exemplary embodiments, the virtual asset information is configured to represent information of virtual devices or virtual resources on a virtual resource layer and a network function layer, such as virtual machines, virtual ports, applications, and processes and so on.

In some exemplary embodiments, the asset association relationship information includes at least one of: information representing association relationships between different physical assets, information representing association relationships between different virtual assets, information representing association relationships between the physical assets and the virtual assets, information representing association relationships between different attribute information, information representing association relationships between the physical assets and the attribute information, and information representing association relationships between the virtual assets and the attribute information.

In some exemplary embodiments, in a case where the collection task is generated according to the collection point information, the acquired collected data includes all asset information of the collection point corresponding to the collection point information; and in a case where the collection task is generated according to the collection point information and the data to be collected, the acquired collected data includes the asset information in the data to be collected in the collection parameters configured for the collection point corresponding to the collection point information.

At operation 103, an information processing task is generated; and an asset association relationship map is constructed according to the information processing task and the collected data and is stored; or a stored asset association relationship map is updated according to the information processing task and the collected data.

In some exemplary embodiments, after generating the information processing task, the method further includes: adding the information processing task to the task list; and each entry of the task list includes: the task identification, the task type, and at least one of the task start time, the task execution state, and the state description information.

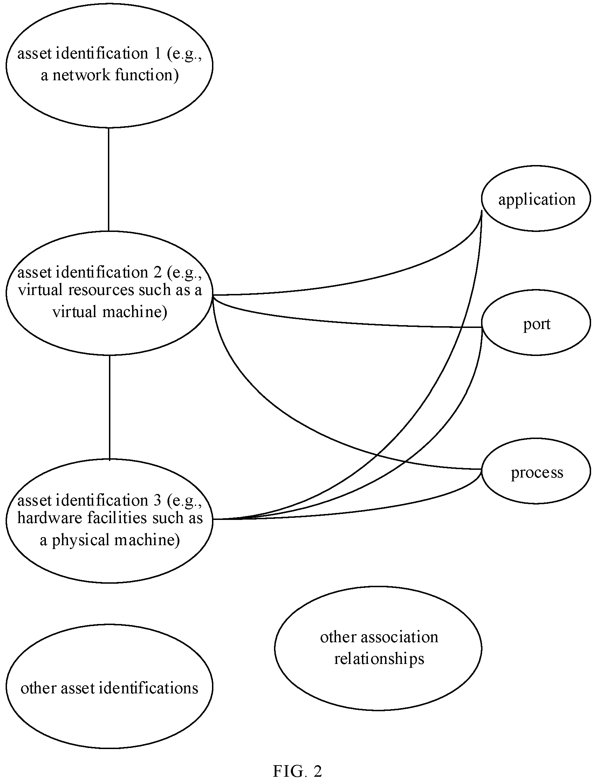

In some exemplary embodiments, as shown in FIG. 2, the asset association relationship map includes at least one layer on the left side thereof, each layer includes at least one node, each node represents an asset identification, and connection lines between nodes represent the association relationship information between the assets. In FIG. 2, an asset identification 1 represents a node at a first layer, an asset identification 2 represents a node at a second layer, and an asset identification 3 represents a node at a third layer.

The asset association relationship map includes at least one node on the right side thereof, each node represents one piece of attribute information, and connection lines between nodes represent the association relationships between the attribute information.

Connection lines between the nodes representing the asset information and the nodes representing the attribute information represent the association relationships between the asset information and the attribute information.

In some exemplary embodiments, updating the stored asset association relationship map according to the information processing task and the collected data includes: in a case of existence of newly added asset association relationship information, adding an asset association relationship corresponding to the newly added asset association relationship information to the stored asset association relationship map; and in a case of a change of the asset association relationship information, modifying the changed asset association relationship information in the stored asset association relationship map.

In some exemplary embodiments, before storing the constructed asset association relationship map or updating the stored asset association relationship map according to the information processing task and the collected data, the method further includes: configuring timed cleaning time and information-processing-data retention time.

After the constructed asset association relationship map is stored or the stored asset association relationship map is updated according to the collected data, the method further includes: in a case of arrival of the timed cleaning time, deleting a node with update time exceeding the information-processing-data retention time among the nodes representing the assets in the asset association relationship map, and deleting the corresponding asset association relationship.

In some exemplary embodiments, the method further includes: configuring information processing timeout time and a first number of retransmission times; in a case where execution time of constructing the asset association relationship map according to the information processing task and the collected data or updating the stored asset association relationship map according to the information processing task and the collected data exceeds the information processing timeout time and the number of re-execution times is less than the first number of retransmission times, re-executing the operation of constructing the asset association relationship map according to the information processing task and the collected data or updating the stored asset association relationship map according to the information processing task and the collected data; and in a case where the execution time of constructing the asset association relationship map according to the information processing task and the collected data or updating the stored asset association relationship map according to the information processing task and the collected data exceeds the information processing timeout time and the number of re-execution times is greater than or equal to the first number of retransmission times, determining that information processing timeout occurs.

In some exemplary embodiments, before storing the preprocessed collected data, the method further includes: configuring timed cleaning time and collected-data retention time.

After storing the preprocessed collected data, the method further includes: in a case of arrival of the timed cleaning time, deleting the preprocessed data with storage time exceeding the collected-data retention time among the stored preprocessed collected data.

In some exemplary embodiments, the method further includes: configuring timed cleaning time and task-list-entry retention time; and in a case of arrival of the timed cleaning time, deleting an entry from the task list, with a time interval between add time of the entry and current time exceeding the task-list-entry retention time.

The telecommunication asset information collection method provided in the embodiments of the present disclosure performs collection of network asset information based on the novel network architecture, and is applicable to the collection of the network asset information of the novel network architecture.

Another embodiment of the present disclosure provides an electronic device, including: at least one processor; and a storage device having stored thereon at least one program which, when executed by the at least one processor, implements the asset information collection method described in any one of the above embodiments.

The processor is a device having data processing capability, and includes, but is not limited to, a Central Processing Unit (CPU); and the storage device is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

In some embodiments, the processor and the storage device are connected to each other through a bus, and then are connected to other components of a computing device.

Another embodiment of the present disclosure provides a computer-readable storage medium having stored thereon a computer program which, when executed by a processor, implements the asset information collection method described in any one of the above embodiments.

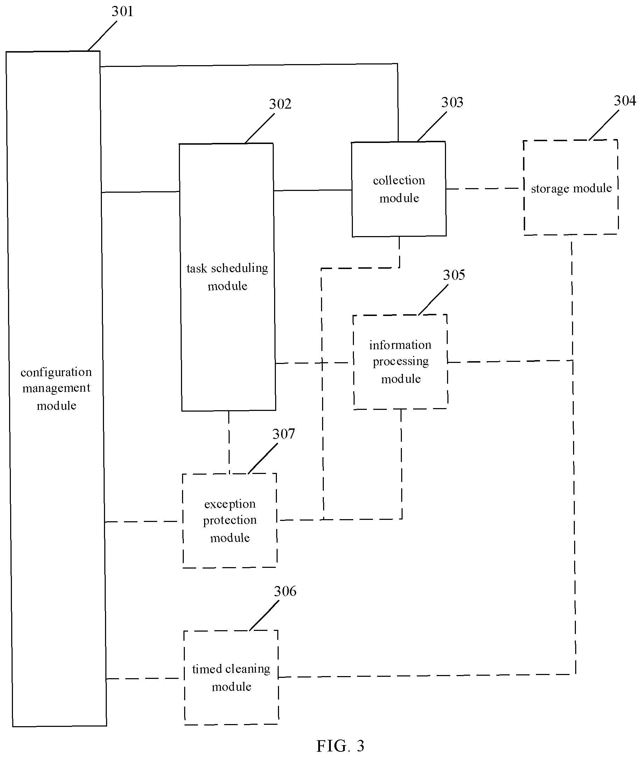

FIG. 3 is a block diagram of an asset information collection device according to the present disclosure.

The present disclosure provides an asset information collection device, including: a configuration management module 301, a task scheduling module 302, and a collection module 303.

The configuration management module 301 is configured to configure collection parameters, which include collection time and collection point information; the task scheduling module 302 is configured to generate a collection task according to the collection point information in a case of arrival of the collection time; the collection module 303 is configured to acquire collected data from a collection point corresponding to the collection point information according to the collection task, with the collected data including: asset information and asset association relationship information; and the task scheduling module 302 is further configured to generate an information processing task. In addition, the asset information collection device provided in the present disclosure may further include: an information processing module 305, which is configured to construct an asset association relationship map according to the information processing task and the collected data, or update a stored asset association relationship map according to the information processing task and the collected data; and a storage module 304, which is configured to store the constructed asset association relationship map or the updated asset association relationship map.

In some exemplary embodiments, the configuration management module 301 is further configured to issue the collection time to the task scheduling module 302, and issue the collection point information to the task scheduling module 302 and the collection module 303.

In some exemplary embodiments, the collection task is configured to instruct the collection module 303 to acquire the collected data from the collection point corresponding to the collection point information.

In some exemplary embodiments, for a newly added collection point, the collection parameters may further include at least one of: an asset type of assets at the collection point, an authentication type, authentication parameters, and a collection mode.

In some example embodiments, different authentication types are corresponding to different authentication parameters. For example, for password authentication, the authentication parameters may be password authentication parameters; for token authentication, the authentication parameters may be token authentication parameters; and for certificate authentication, the authentication parameters may be certificate information.

In some exemplary embodiments, the password authentication parameters include: a user name and a password.

In some exemplary embodiments, the token authentication parameters include: a user name, a password, a Token name, and a Token address.

In some exemplary embodiments, the collection mode may be, for example, collecting a file related to asset information via a rest interface, so as to acquire the corresponding asset information from the file.

In some exemplary embodiments, the configuration management module 301 may configure to delete at least one of the configured collection parameters or to modify at least one of the configured collection parameters.

In some exemplary embodiments, when the collection module 303 acquires the collected data from the collection point corresponding to the collection point information according to the collection task, the collection module 303 may first send the corresponding authentication parameters to the collection point corresponding to the collection point information according to the authentication type, so as to enable the collection point to perform authentication on the collection module 303 according to the authentication parameters. After the collection module 303 passes the authentication, the collection module 303 may acquire the collected data from the collection point corresponding to the collection point information.

In some exemplary embodiments, the task scheduling module 302 is further configured to issue the collection task to the collection module 303.

In some exemplary embodiments, the task scheduling module 302 is further configured to add the collection task to a task list, call the collection task from the task list, and issue the collection task to the collection module 303, wherein each entry of the task list includes: a task identification, a task type, and at least one of task start time, a task execution state, and state description information.

In some exemplary embodiments, the task identification is configured to distinguish between different tasks.

In some exemplary embodiments, the task type is configured to indicate a type of a task, such as the collection task or the information processing task.

In some exemplary embodiments, the task start time refers to the time when execution of a task is started.

In some exemplary embodiments, the task execution state refers to a state of a task during execution of the task, such as collection timeout, information processing timeout and so on.

In some exemplary embodiments, the state description information refers to description information of the task execution state.

In some exemplary embodiments, the collection module 303 is further configured to report a collection result, which is configured to indicate whether collection is successful, to the task scheduling module 302 after acquisition of the collected data is completed.

In some exemplary embodiments, the collection parameters further include data to be collected; and the task scheduling module 302 is specifically configured to generate the collection task according to the collection point information and the data to be collected.

In some exemplary embodiments, the collection module 303 is further configured to preprocess the collected data to obtain preprocessed collected data.

The asset information collection device provided in the present disclosure further includes: the storage module 304 configured to store the preprocessed collected data.

In some exemplary embodiments, the task scheduling module 302 is further configured to generate the information processing task in a case where the collection result indicates that the collection is successful.

In some exemplary embodiments, the task scheduling module 302 is further configured to issue the information processing task to the information processing module 305.

In some exemplary embodiments, the task scheduling module 302 is further configured to add the information processing task to the task list, call the information processing task from the task list, and issue the information processing task to the information processing module 305, wherein each entry of the task list includes: a task identification, a task type, and at least one of task start time, a task execution state, and state description information.

In some exemplary embodiments, the information processing module 305 is further configured to report an information processing result to the task scheduling module 302.

In some exemplary embodiments, the configuration management module 301 is further configured to configure timed cleaning time and information-processing-data retention time.

The asset information collection device provided in the present disclosure further includes: a timed cleaning module 306, which is configured to delete, in a case of arrival of the timed cleaning time, a node with update time exceeding the information-processing-data retention time among nodes representing assets in the asset association relationship map, and delete a corresponding asset association relationship.

In some exemplary embodiments, the configuration management module 301 is further configured to issue the timed cleaning time and the information-processing-data retention time to the timed cleaning module 306.

In some exemplary embodiments, the configuration management module 301 is further configured to configure information processing timeout time and a first number of retransmission times.

The asset information collection device provided in the present disclosure further includes: an exception protection module 307, which is configured to notify, in a case where execution time of constructing the asset association relationship map according to the information processing task and the collected data or updating the stored asset association relationship map according to the information processing task and the collected data exceeds the information processing timeout time and the number of re-execution times is less than the first number of retransmission times, the information processing module 305 to re-execute the operation of constructing the asset association relationship map according to the information processing task and the collected data or updating the stored asset association relationship map according to the information processing task and the collected data, and determine that information processing timeout occurs in a case where the execution time of constructing the asset association relationship map according to the information processing task and the collected data or updating the stored asset association relationship map according to the information processing task and the collected data exceeds the information processing timeout time and the number of re-execution times is greater than or equal to the first number of retransmission times.

In some exemplary embodiments, the configuration management module 301 is further configured to send the information processing timeout time and the first number of retransmission times to the exception protection module 307.

In some exemplary embodiments, the exception protection module 307 may determine whether execution time of performing information processing on the preprocessed collected data exceeds the information processing timeout time according to the task start time or the task execution state in the task list. Specifically, if a time interval between the task start time and current time exceeds the information processing timeout time or the task execution state is the information processing timeout, the exception protection module 307 determines that the execution time of performing information processing on the preprocessed collected data exceeds the information processing timeout time; and if the time interval between the task start time and the current time does not exceed the information processing timeout time or the task execution state is information processing completion, the exception protection module 307 determines that the execution time of performing information processing on the preprocessed collected data does not exceed the information processing timeout time.

In some exemplary embodiments, the exception protection module 307 may also determine whether the execution time of performing information processing on the preprocessed collected data exceeds the information processing timeout time according to whether the information processing module 305 reports the information processing result to the task scheduling module 302 within the information processing timeout time since the information processing module 305 receives the information processing task. Specifically, if the information processing module 305 does not report the information processing result to the task scheduling module 302 within the information processing timeout time since the information processing module 305 receives the information processing task, the exception protection module 307 determines that the execution time of performing information processing on the preprocessed collected data exceeds the information processing timeout time; and if the information processing module 305 reports the information processing result to the task scheduling module 302 within the information processing timeout time since the information processing module 305 receives the information processing task, the exception protection module 307 determines that the execution time of performing information processing on the preprocessed collected data does not exceed the information processing timeout time.

In some exemplary embodiments, the configuration management module 301 is further configured to configure timed cleaning time and collected-data retention time.

The asset information collection device provided in the present disclosure further includes: the timed cleaning module 306, which is configured to delete, in a case of arrival of the timed cleaning time, the preprocessed data with storage time exceeding the collected-data retention time among the stored preprocessed collected data.

In some exemplary embodiments, the configuration management module 301 is further configured to issue the timed cleaning time and the collected-data retention time to the timed cleaning module 306.

In some exemplary embodiments, the configuration management module 301 is further configured to configure collection timeout time and a second number of retransmission times.

The asset information collection device provided in the present disclosure further includes: an exception protection module 307, which is configured to notify, in a case where execution time of acquiring the collected data exceeds the collection timeout time and the number of re-execution times is less than the second number of retransmission times, the collection module 303 to re-execute the operation of acquiring the collected data from the collection point corresponding to the collection point information according to the collection task, and determine that collection timeout occurs in a case where the execution time of acquiring the collected data exceeds the collection timeout time and the number of re-execution times is greater than and equal to the second number of retransmission times.

In some exemplary embodiments, the configuration management module 301 is further configured to issue the collection timeout time and the second number of retransmission times to the exception protection module 307.

In some exemplary embodiments, the exception protection module 307 may determine whether the execution time of acquiring the collected data exceeds the collection timeout time according to the task start time or the task execution state in the task list. Specifically, if a time interval between the task start time and current time exceeds the collection timeout time or the task execution state is the collection timeout, the exception protection module 307 determines that the execution time of acquiring the collected data exceeds the collection timeout time; and if the time interval between the task start time and the current time does not exceed the collection timeout time or the task execution state is collection completion, the exception protection module 307 determines that the execution time of acquiring the collected data does not exceed the collection timeout time.

In some exemplary embodiments, the exception protection module 307 may also determine whether the execution time of acquiring the collected data exceeds the collection timeout time according to whether the collection module 303 reports the collection result to the task scheduling module 302 within the collection timeout time since the collection module 303 receives the collection task. Specifically, if the collection module 303 reports the collection result to the task scheduling module 302 within the collection timeout time since the collection module 303 receives the collection task, the exception protection module 307 determines the execution time of acquiring the collected data does not exceed the collection timeout time; and if the collection module 303 does not report the collection result to the task scheduling module 302 within the collection timeout time since the collection module 303 receives the collection task, the exception protection module 307 determines the execution time of acquiring the collected data exceeds the collection timeout time.

In some exemplary embodiments, the configuration management module 301 is further configured to configure timed cleaning time and task-list-entry retention time.

The asset information collection device provided in the present disclosure further includes: the timed cleaning module 306, which is configured to delete, in a case of arrival of the timed cleaning time, an entry from the task list, with a time interval between add time of the entry and current time exceeding the task-list-entry retention time.

In some exemplary embodiments, the asset information includes at least one of: physical asset information and virtual asset information.

Specific implementation processes of the asset information collection device are the same as those of the asset information collection method described in the aforesaid embodiments, and thus will not be repeated here.

In order to present the asset information collection method provided in the embodiments of the present disclosure more directly, examples are listed and described below, but the listed examples are not intended to limit the scope of the embodiments of the present disclosure.

### Example One

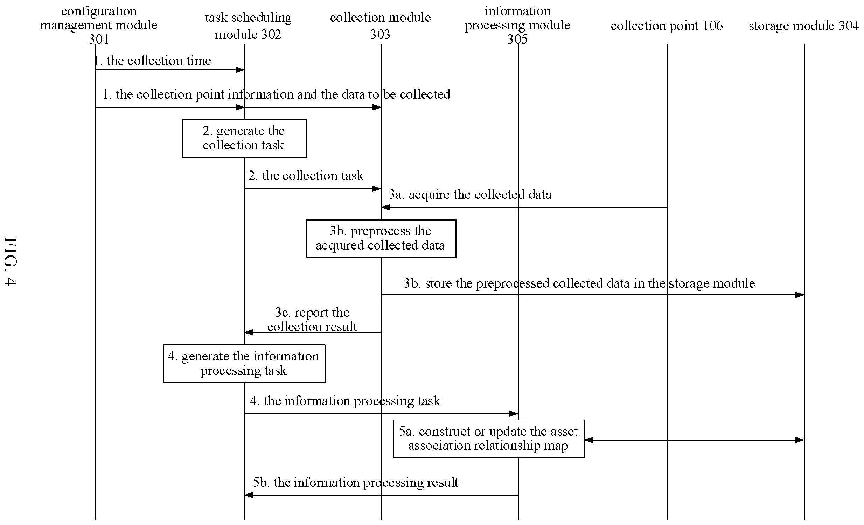

As shown in FIG. 4, a collection and information processing process of the asset information includes the following operations.

At operation 1, a configuration management module 301 issues collection time to a task scheduling module 302, for example, the collection time is 08:00:00; and the configuration management module 301 issues collection point information and data to be collected to the task scheduling module 302 and a collection module 303, respectively. For example, the collection point information is the information of a collection point 106, and the data to be collected is the asset association relationship information to be collected.

The information of a newly added collection point includes, but is not limited to, a name of the collection point, an asset type of assets at the collection point, an authentication type, a user name, a password, a collection mode, a Token name, a Token address, and certificate information.

At operation 2, in a case of arrival of the collection time, the task scheduling module 302 generates a collection task according to the collection point information and the data to be collected, adds the collection task to a task list, calls the collection task from the task list, and issues the collection task to the collection module 303.

Operation 3 includes operations 3a, 3b, and 3c.

At operation 3a, after receiving the collection task, the collection module 303 acquires the collected data from the collection point.

At operation 3b, the collection module 303 preprocesses the collected data, and stores the preprocessed collected data in a storage module 304.

At operation 3c, when the collection is completed, the collection module 303 reports a collection result, which is configured to indicate whether the collection is successful, to the task scheduling module 302.

At operation 4, the task scheduling module 302 receives the collection result, generates an information processing task according to the reported collection result, adds the information processing task to the task list, calls the information processing task from the task list, and issues the information processing task to an information processing module 305.

Operation 5 includes the following operations 5a and 5b.

At operation 5a, the information processing module 305 receives the information processing task, and constructs an asset association relationship map according to the preprocessed collected data and stores the constructed asset association relationship map in the storage module 304, or updates the stored asset association relationship map according to the preprocessed collected data and stores the updated asset association relationship map in the storage module 304.

At operation 5b, the information processing module 305 reports an information processing result to the task scheduling module 302.

### Example Two

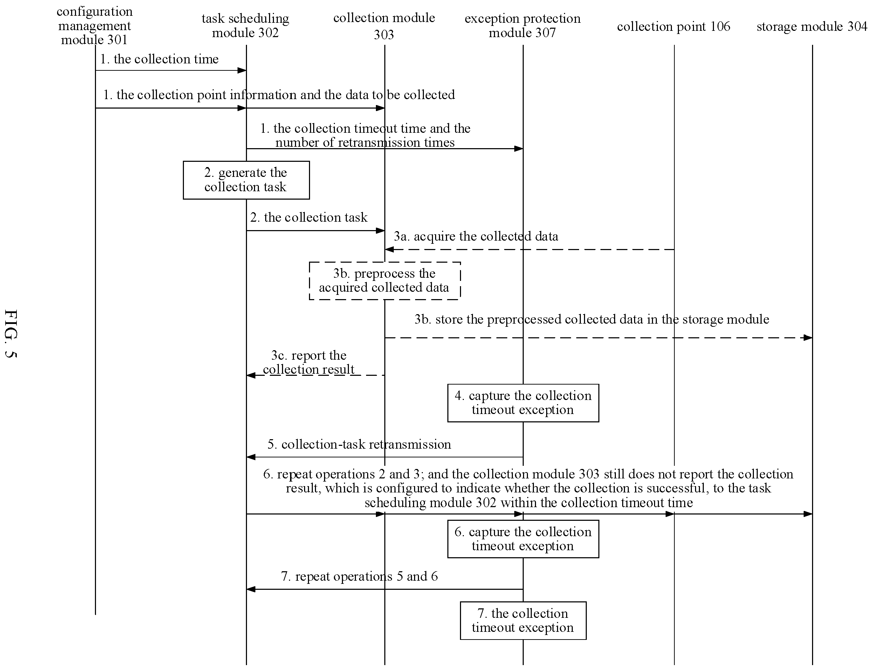

As shown in FIG. 5, an exception handling process of collection timeout includes the following operations.

At operation 1, a configuration management module 301 issues collection time to a task scheduling module 302, for example, the collection time is 08:00:00; the configuration management module 301 issues collection point information and data to be collected to the task scheduling module 302 and a collection module 303, respectively, for example, the collection point information is the information of a collection point 106, and the data to be collected is the asset association relationship information to be collected; and the configuration management module 301 issues collection timeout time (e.g., 5min) and the number of retransmission times (e.g., 2) to an exception protection module 307.

At operation 2, in a case of arrival of the collection time, the task scheduling module 302 generates a collection task according to the collection point information and the data to be collected, adds the collection task to a task list, calls the collection task from the task list, and issues the collection task to the collection module 303.

Operation 3 includes operations 3a, 3b, and 3c.

At operation 3a, after receiving the collection task, the collection module 303 acquires the collected data from the collection point.

At operation 3b, the collection module 303 preprocesses the collected data, and stores the preprocessed collected data in a storage module 304.

At operation 3c, when the collection is completed, the collection module 303 reports a collection result, which is configured to indicate whether the collection is successful, to the task scheduling module 302.

The dotted lines in FIG. 5 represent optional operations, that is, the overall time of executing the optional operations exceeds the collection timeout time when the collection module 303 performs the collection task.

At operation 4, if the collection module 303 does not report the collection result, which is configured to indicate whether the collection is successful, to the task scheduling module 302 within the collection timeout time, the exception protection module 307 captures the collection timeout exception, and determines that the collection timeout occurs.

At operation 5, the exception protection module 307 initiates a message of collecting-task retransmission function to the task scheduling module 302, and retransmission is performed since the task timeout occurs for the first time.

At operation 6, operations 2 and 3 are repeated; and the collection module 303 still does not report the collection result, which is configured to indicate whether the collection is successful, to the task scheduling module 302 within the collection timeout time, the exception protection module 307 captures the collection timeout exception, and determines that the collection timeout occurs.

At operation 7, operation 5 is repeated to start the retransmission function, that is, the retransmission is performed since the task timeout occurs for the second time; and operation 6 is repeated, and the collection module 303 still does not report the collection result, which is configured to indicate whether the collection is successful, to the task scheduling module 302 within the collection timeout time, the exception protection module 307 captures the collection timeout exception, and finally determines that the collection timeout occurs.

### Example Three

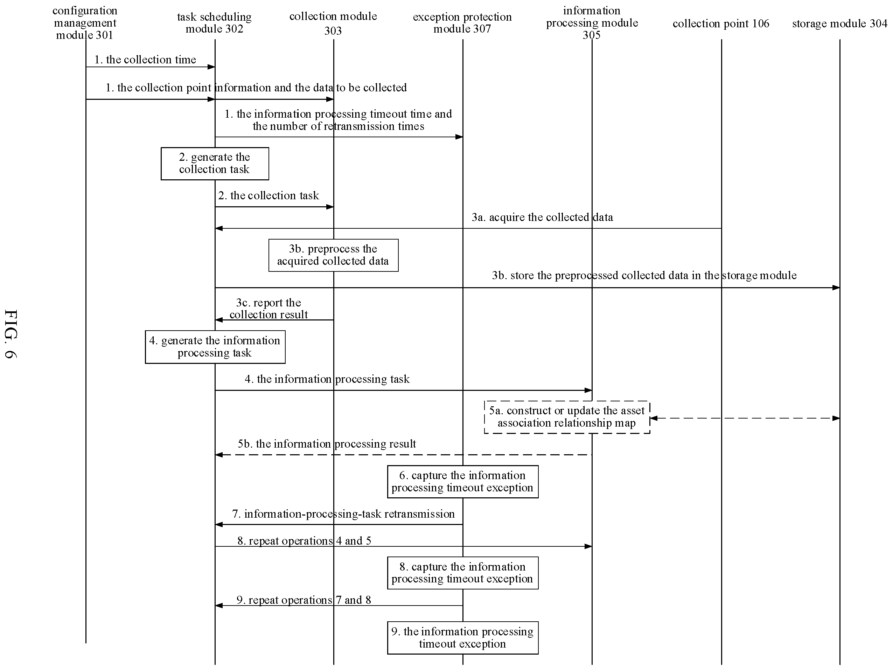

As shown in FIG. 6, an exception handling process of information processing timeout includes the following operations.

At operation 1, a configuration management module 301 issues collection time to a task scheduling module 302, for example, the collection time is 08:00:00; the configuration management module 301 issues collection point information and data to be collected to the task scheduling module 302 and a collection module 303, respectively, for example, the collection point information is the information of a collection point 106, and the data to be collected is the asset association relationship information to be collected; and the configuration management module 301 issues information processing timeout time (e.g., 15min) and the number of retransmission times (e.g., 2) to an exception protection module 307.

At operation 2, in a case of arrival of the collection time, the task scheduling module 302 generates a collection task according to the collection point information and the data to be collected, adds the collection task to a task list, calls the collection task from the task list, and issues the collection task to the collection module 303.

Operation 3 includes operations 3a, 3b, and 3c.

At operation 3a, after receiving the collection task, the collection module 303 acquires the collected data from the collection point.

At operation 3b, the collection module 303 preprocesses the collected data, and stores the preprocessed collected data in a storage module 304.

At operation 3c, when the collection is completed, the collection module 303 reports a collection result, which is configured to indicate whether the collection is successful, to the task scheduling module 302.

At operation 4, the task scheduling module 302 receives the collection result, generates an information processing task according to the reported collection result, adds the information processing task to the task list, calls the information processing task from the task list, and issues the information processing task to an information processing module 305.

Operation 5 includes the following operations 5a and 5b.

At operation 5a, the information processing module 305 receives the information processing task, and constructs an asset association relationship map according to the preprocessed collected data and stores the constructed asset association relationship map in the storage module 304, or updates the stored asset association relationship map according to the preprocessed collected data and stores the updated asset association relationship map in the storage module 304.

At operation 5b, the information processing module 305 reports an information processing result to the task scheduling module 302.

At operation 6, if the information processing module 305 does not report the information processing result to the task scheduling module 302 within the information processing timeout time, the exception protection module 307 captures the information processing timeout exception, and determines that the information processing timeout occurs.

At operation 7, the exception protection module 307 initiates a message of information-processing-task retransmission to the task scheduling module 302, and retransmission is performed since the task timeout occurs for the first time.

At operation 8, operations 4 and 5 are repeated; and the information processing module 305 still does not report the information processing result to the task scheduling module 302 within the information processing timeout time, the exception protection module 307 captures the information processing timeout exception again, and determines that the information processing timeout occurs.

At operation 9, operation 7 is repeated to start the task retransmission function, that is, the retransmission is performed since the task timeout occurs for the second time; and operation 8 is repeated, and the information processing module 305 still does not report the information processing result to the task scheduling module 302 within the information processing timeout time, the exception protection module 307 captures the information processing timeout exception, and finally determines that the information processing timeout occurs.

### Example Four

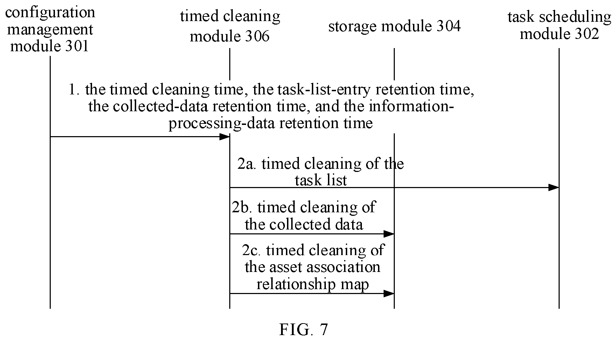

As shown in FIG. 7, a timed cleaning process includes the following operations.

At operation 1, a configuration management module 301 issues timed cleaning time, task-list-entry retention time, collected-data retention time, and information-processing-data retention time to a timed cleaning module 306. For example, the timed cleaning time is 01:00:00, the task-list-entry retention time is 30 days, the collected-data retention time is 180 days, and the information-processing-data retention time is 3 days.

At operation 2, when the retention time configured in operation 1 for the data is exceeded, the timed cleaning module 306 performs cleaning on the corresponding module data, which includes the following three cleaning tasks.

At operation 2a, timed cleaning of the task list is performed: when a task scheduling module 302 generates a collection task and an information processing task, the collection task and the information processing task are added to a task list, and the task list is stored locally; and the timed cleaning module 306 periodically cleans an entry from the task list, with a time interval between add time of the entry and current time exceeding the task-list-entry retention time (30 days). The timed cleaning of the task list is executed at 01:00:00 every day by default, and the data which is stored for no more than 30 days is retained.

At operation 2b, timed cleaning of collected data stored in a storage module 304 is performed: the collected data is stored in the storage module 304, and the timed cleaning module 306 periodically cleans up indexes and the collected data with storage time exceeding the collected-data retention time. Updating of indexes and cleaning of the collected data are executed at 01:00:00 every day by default, and the indexes and the collected data which are stored for more than 180 days are cleaned up.

At operation 2c, timed cleaning of the asset association relationship map stored in the storage module 304 is performed: the information processing data is stored in the storage module 304, and the timed cleaning module 306 deletes a node with update time exceeding the information-processing-data retention time among the nodes representing the assets in the asset association relationship map, and deletes the corresponding asset association relationship. The timed cleaning of the asset association relationship map stored in the storage module 304 is executed at 01:00:00 every day by default.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. An asset information collection method, comprising:
configuring collection parameters, wherein the collection parameters comprise collection time and collection point information;
in a case of arrival of the collection time, generating a collection task according to the collection point information;
acquiring collected data from a collection point corresponding to the collection point information according to the collection task, wherein the collected data comprises: asset information and asset association relationship information; and
generating an information processing task; and constructing an asset association relationship map according to the information processing task and the collected data, and storing the constructed asset association relationship map; or updating a stored asset association relationship map according to the information processing task and the collected data.

2. The asset information collection method of claim 1, wherein the collection parameters further comprise data to be collected; and
generating the collection task according to the collection point information comprises: generating the collection task according to the collection point information and the data to be collected.

3. The asset information collection method of claim 1, wherein after acquiring the collected data from the collection point corresponding to the collection point information according to the collection task, the method further comprises:
preprocessing the collected data to obtain preprocessed collected data, and storing the preprocessed collected data;
constructing the asset association relationship map according to the information processing task and the collected data and storing the constructed asset association relationship map comprises: constructing the asset association relationship map according to the information processing task and the preprocessed collected data, and storing the constructed asset association relationship map; and
updating the stored asset association relationship map according to the information processing task and the collected data comprises: updating the stored asset association relationship map according to the information processing task and the preprocessed collected data.

4. The asset information collection method of claim 1, wherein before storing the constructed asset association relationship map, or before updating the stored asset association relationship map according to the information processing task and the collected data, the method further comprises:
configuring timed cleaning time and information-processing-data retention time; and
after storing the constructed asset association relationship map, or after updating the stored asset association relationship map according to the information processing task and the collected data, the method further comprises:
in a case of arrival of the timed cleaning time, deleting a node with update time exceeding the information-processing-data retention time among nodes representing assets in the asset association relationship map, and deleting a corresponding asset association relationship.

5. The asset information collection method of claim 1, further comprising:
configuring information processing timeout time and a first number of retransmission times;
in a case where execution time of constructing the asset association relationship map according to the information processing task and the collected data or updating the stored asset association relationship map according to the information processing task and the collected data exceeds the information processing timeout time and a number of re-execution times is less than the first number of retransmission times, re-executing the operation of constructing the asset association relationship map according to the information processing task and the collected data or updating the stored asset association relationship map according to the information processing task and the collected data; and
in a case where the execution time of constructing the asset association relationship map according to the information processing task and the collected data or updating the stored asset association relationship map according to the information processing task and the collected data exceeds the information processing timeout time and the number of re-execution times is greater than or equal to the first number of retransmission times, determining that information processing timeout occurs.

6. The asset information collection method of claim 3, wherein before storing the preprocessed collected data, the method further comprises:
configuring timed cleaning time and collected-data retention time; and
after storing the preprocessed collected data, the method further comprises:
in a case of arrival of the timed cleaning time, deleting preprocessed data with storage time exceeding the collected-data retention time among the stored preprocessed collected data.

7. The asset information collection method of claim 1, further comprising:
configuring collection timeout time and a second number of retransmission times;
in a case where execution time of acquiring the collected data exceeds the collection timeout time and a number of re-execution times is less than the second number of retransmission times, re-executing the operation of acquiring the collected data from the collection point corresponding to the collection point information according to the collection task; and
in a case where the execution time of acquiring the collected data exceeds the collection timeout time and the number of re-execution times is greater than and equal to the second number of retransmission times, determining that collection timeout occurs.

8. The asset information collection method of any one of claims 1 to 7, wherein the asset information comprises at least one of: physical asset information or virtual asset information.

9. An electronic device, comprising:
at least one processor; and
a storage device having stored thereon at least one program which, when executed by the at least one processor, implements the asset information collection method of any one of claims 1 to 8.

10. A computer-readable storage medium having stored thereon a computer program which, when executed by a processor, implements the asset information collection method of any one of claims 1 to 8.
